# EUROPÄISCHE PATENTSCHRIFT

(11) **EP 0 650 564 B1**
(45) Veröffentlichungstag und Bekanntmachung des Hinweises auf die Patenterteilung: **24.07.1996**
(21) Anmeldenummer: 93914693.2
(22) Anmeldetag: 22.06.1993
(51) Int. Cl.: F16H 47/02, F16H 61/42, B60K 17/10

(54) **GETRIEBEEINHEIT ZUR ANORDNUNG ZWISCHEN EINEM ANTRIEBSMOTOR UND EINEM VERBRAUCHER**
GEARBOX UNIT FOR INSERTION BETWEEN A DRIVE MOTOR AND A USER
ENSEMBLE BOITE DE VITESSES A DISPOSER ENTRE UN MOTEUR D'ENTRAINEMENT ET UN RECEPTEUR

(30) Priorität: 20.07.1992 DE 4223846
(43) Veröffentlichungstag der Anmeldung: 03.05.1995
(73) Patentinhaber: BRUENINGHAUS HYDROMATIK GMBH, D-89275 Elchingen (DE)
(72) Erfinder: WIEST, Wolfgang, D-Neu-Ulm (DE)
(74) Vertreter: Körber, Wolfhart, Dr. rer.nat.
(86) Internationale Anmeldenummer: EP9301593
(87) Internationale Veröffentlichungsnummer: WO9402758

(56) Entgegenhaltungen:
- EP-A- 0 301 918
- WO-A-89/03320
- GB-A- 2 161 553
- US-A- 3 864 991

## Beschreibung

Die Erfindung bezieht sich auf eine Getriebeeinheit nach dem oberbegriff des Anspruchs 1.

Bei Antrieben kann es aus verschiedenen Gründen erforderlich sein, zwischen dem Antriebsmotor und dem Verbraucher ein Schaltgetriebe anzuordnen. Ein Grund hierfür kann darin bestehen, daß gewünschte Drehzahlen für den Verbraucher sich von der Abtriebdrehzahl eines gegebenen Antriebsmotors so wesentlich unterscheiden, daß ein Schaltgetriebe vorzusehen ist. Ein anderer Grund kann darin bestehen, daß bei bestimmten Verbrauchern, wie zum Beispiel Fahrzeugen und insbesondere Baufahrzeugen, bestimmte Rad- und Kettenantriebe vorgegeben sind, wovon bei der Bestimmung des Antriebsmotors auszugehen ist. Ein weiterer grundsätzlicher Grund für die Verwendung eines Schaltgetriebes besteht auch darin, daß ein Schaltgetriebe die Funktion des vorhandenen Antriebs in günstigen Drehzahlbereichen des Antriebsmotors ermöglicht, was insbesondere bei der Verwendung von Verbrennungsmotoren und vorzugsweise Dieselmotoren als Antriebsmotor der Fall ist. Hierbei ist hervorzuheben, daß insbesondere Baumaschinen wie Radlader, Erdschieber, Bagger und dgl. wie auch Komunaltraktoren und Geräteträger vorzugsweise mit Verbrennungsmotoren, insbesondere Dieselmotoren, angetrieben werden, wodurch ein von einer ortsfesten Energiequelle unabhängiger Antrieb vorgegeben ist, der kräftig ist und kostengünstig betrieben werden kann.

Insbesondere ebenfalls bei vorgenannten Baumschinen und Geräten ist es erwünscht, im wesentlichen ohne Last bzw. Antriebsunterbrechunng schalten zu können, was sich durch sogenannte Lastschaltgetriebe weitgehend verwirklichen läßt.

Eine Getriebeeinheit der eingangs angehenden Art ist in der DE 34 33 495 C2 für teilautomatisches Schalten und in der DE 34 33 494 C2 für automatisches Schalten beschrieben. Diese beiden Getriebeeinheiten umfassen jeweils ein verstellbares hydrostatisches Getriebe und ein Lastschaltgetriebe, wobei in allen Fällen die Verstellbarkeit des hydrostatischen Getriebes dazu ausgenutzt wird, zum einen mit einem Leistungsregler die übertragene Leistung zu regeln und zum anderen für einen Schaltvorgang eine durch die zu schaltende Gangstufe vorgegebene Drezahlanpassung herbeizuführen. Die Drehzahlanpassung erfolgt im Bereich einer Kupplung am Ausgang des hydrostatischen Getriebes (DE 34 33 495 C2) oder im Bereich der Kupplung der jeweiligen Lastschaltgangstufe (DE 34 33 495 C2), wobei die Ausgangsdrehzahl des hydrostatischen Getriebes so verstellt wird, daß Drehzahlgleichheit an der jeweiligen Kupplung besteht, wonach ruckfrei geschaltet wird. Dabei bedarf es nicht unbedingt einer Drehzahlveränderung des Antriebsmotors, der bei diesen bekannten Ausgestaltungen durch einen Verbrennungsmotor gebildet ist.

Bei den bekannten Getriebeeinheiten ist sowohl ausgestaltungsmäßig als auch schaltungstechnisch ein großer Aufwand vorgegeben. Letzteres ist dadurch bedingt, daß für einen Schaltvorgang die Ausgangsdrehzahl des hydrostatischen Getriebes gezielt an die durch die Gangstufe der erforderlichen Drehzahl anzupassen ist. Durch diese gezielte Anpassung ist außerdem ein beträchtlicher zeitaufwand zum Schalten erforderlich. Ein weiterer Nachteil ist bei den bekannten Getriebeeinheiten dadurch vorgegeben, daß Lastschaltgetriebe in der Regel Lamellenkupplungen aufweisen, die nicht nur verhältnismäßig teuer in der Herstellung sind sondern auch eine aufwendige Steuerungs- und Regelungstechnik erfordern und außerdem verhältnismäßig viel Wärme erzeugen und dadurch zu einer ungünstigen Wärmebilanz führen. Bei den bekannten Geriebeeinheiten sind deshalb der Wirkungsgrad und die Leistungsübertragung unbefriedigend.

Der Erfindung liegt die Aufgabe zugrunde, eine Getriebeeinheit der eingangs angegebenen Art so weiterzubilden, daß bei Gewährleistung einer einfachen und kostengünstigen Bauweise der Aufwand zum Schalten verringert ist.

Diese Aufgabe wird durch die Merkmale des Anspruchs 1 gelöst.

Bei der erfindungsgemäßen Getriebeeinheit kommt anstelle eines aufwendigen und teuren Lastschaltgetriebes eine insbesondere mechanische zwangs synchronisierte Synchronisiereinrichtung mit einem insbesondere mechanischen Schaltgetriebe zum Einsatz, die bzw. das als Standardausführung auf dem Markt in einer Vielzahl von Variationen bezüglich Baugröße und Anwendungsfälle angeboten wird und dabei kostengünstig erhältlich ist und außerdem sich in einfacher Weise schalten läßt. Bei der erfindungsgemäßen Getriebeeinheit kommt für den Schaltvorgang eine gezielte Drezahlanpassung in Fortfall.

Es erfolgt lediglich eine Steuerung oder Regelung des Abtriebdrehmomentes des hydrostatischen Getriebes dahingehend, daß es gleich oder kleiner ist als das zulässig übertragbare Leistungs- bzw. Arbeitsmoment der Synchroneinrichtung der zugehörigen Gangstufe. Bei der erfindungsgemäßen Getriebeeinheit bedarf es keiner gezielten Anpassung. Vielmehr genügt es, wenn das Abtriebmoment gleich oder kleiner ist als das zulässig übertragbare Arbeitsmoment. Hierzu steht ein verhältnismäßig großer Bereich zur Verfügung, so daß es einer gezielten Anpassung nicht bedarf. Ein vorhandener Drehzahlunterschied in der vorhandenen Synchroneinrichtung ist unerheblich, da die Drehzahlanpassung von der Synchroneinrichtung selbsttätig bzw. zwangsläufig ausgeführt wird, ohne daß sie gezielt herbeigeführt werden muß. Deshalb läßt sich die erfindungsgemäße Getriebeeinheit nicht nur einfacher sondern auch schneller schalten. Dabei hat es sich gezeigt, daß die Synchroneinrichtungen eines Schaltgetriebes im Betrieb weniger Wärme erzeugen, als wie es bei sogenannten Lastschaltgetrieben üblich ist. Es ist im Rahmen der Erfindung zwar möglich, das Abtriebmoment des hydrostatischen Getriebes so zu regeln, daß seine Größe immer auf oder nahe einer die Leistungsgrenze der Synchroneinrichtung darstellenden Kennlinie liegt, jedoch ist dies kein Erfordernis, da der gesamte Abtriebdrehmomentbereich unterhalb einer solchen Kennlinie angesteuert werden kann.

Die Erfindung eignet sich vorzüglich für Antriebe von selbstfahrenden Fahrzeugen mit hohem Wandlungsbereich. Dabei kann ein hydrostatisches Getriebe geschlossenen oder offenen Kreislaufs eingesetzt werden. Eine besondere Kupplung, insbesondere zwischen dem hydrostatischen Getriebe und dem Schaltgetriebe ist bei der Erfindung nicht erfoderlich.

Bei der Erfindung wird somit erreicht, daß das hydrostatische Getriebe in seinem Lastzustand entsprechend den spezifischen Daten der verwendeten Synchroneinrichtungen gesteuert oder geregelt wird, wodurch bei einfacher und kostengünstige Ausgestaltung ein störungsfreies und schnelles Schalten erreicht wird, ohne daß das synchronisierte Getriebe überbelastet wird und deshalb eine störungsfreie Funktion und lange Lebensdauer gewährleistet ist.

Die erfindungsgemäße Getriebeeinheit läßt sich sowohl für manuelles, halbautomatisches oder auch vollautomatisches Schalten verwenden und zwar sowohl für ein Rauf- oder Runterschalten. In den beiden zuletzt genannten Fällen kann eine halb- oder vollautomatische Schalteinrichtung vorgesehen sein, mit einer Verstellvorrichtung für das hydrostatische Getriebe und einer Schaltvorrichtung für die Gänge des Schaltgetriebes. Eine solche Schalteinrichtung kann einen Computer bzw. einen Prozessor enthalten, der die Schaltkriterien überwacht und das Schalten einleitet, wenn die Schaltkriterien erfüllt sind. Hierbei handelt es sich um das zulässig übertragbare Arbeitsmoment der Synchroneinrichtungen des Schaltgetriebes und des Abtriebsmoments des hydrostatischen Getriebes das durch eine Überwachung des Lastzustandes des hydrostatischen Getriebes ermittelt werden kann. Hierzu eignet sich vorzugsweise eine Überwachung des Arbeitsdrucks des hydrostatischen Getriebes ein Druckmesser oder Druckumformer. Aus dem jeweiligen Druckwert kann unter Berücksichtigung der vorliegenden Getriebeeinstellung und Parameter das wirksame Abtriebsmoment ermittelt bzw. errechnet werden.

Das jeweilig zulässig übertragbare Arbeitsmoment bzw. die Leistungsgrenzen der Synchroneinrichtungen des Schaltgetriebes sind bekannt oder zu bestimmen. Es ist vorteilhaft, diese Daten in der Steuer- oder Regeleinrichtung der Schalteinrichtung zum Beispiel durch Einspeichern vorzugeben, da diese Daten bezüglich des jeweils vorhandenen synchronisierten Schaltgetriebes feste Werte sind.

In den Unteransprüchen sind Merkmale enthalten, die zur Problemlösung beitragen und sowohl eine befriedigende Ermittlung des jeweiligen Abtriebsmoments des hydrostatischen Getriebes als auch dessen Verstellung ermöglichen.

Dabei ist zu bemerken, daß es mehrere Möglichkeiten zur Einstellung des Lastzustandes des hydrostatischen Getriebes gibt. Es ist zum einen möglich, den Arbeitsdruck des hydrostatischen Getriebes mittels eines geeigneten Ventils so zu steuern oder zu regeln, daß das Abtriebsmoment in den erwünschten Bereich fällt. Letzteres läßt sich jedoch auch durch eine gezielte Veränderung des Übersetzungsverhältnisses des hydrostatischen Getriebes erreichen. Es ist im weiteren auch möglich, beim Vorhandensein von einem hydrostatischen Getriebe mit mehreren Abtrieben wenigstens einen Antrieb teilweise oder ganz abzuschalten, wodurch sich das Abtriebsmoment ebenfalls gezielt verringern läßt.

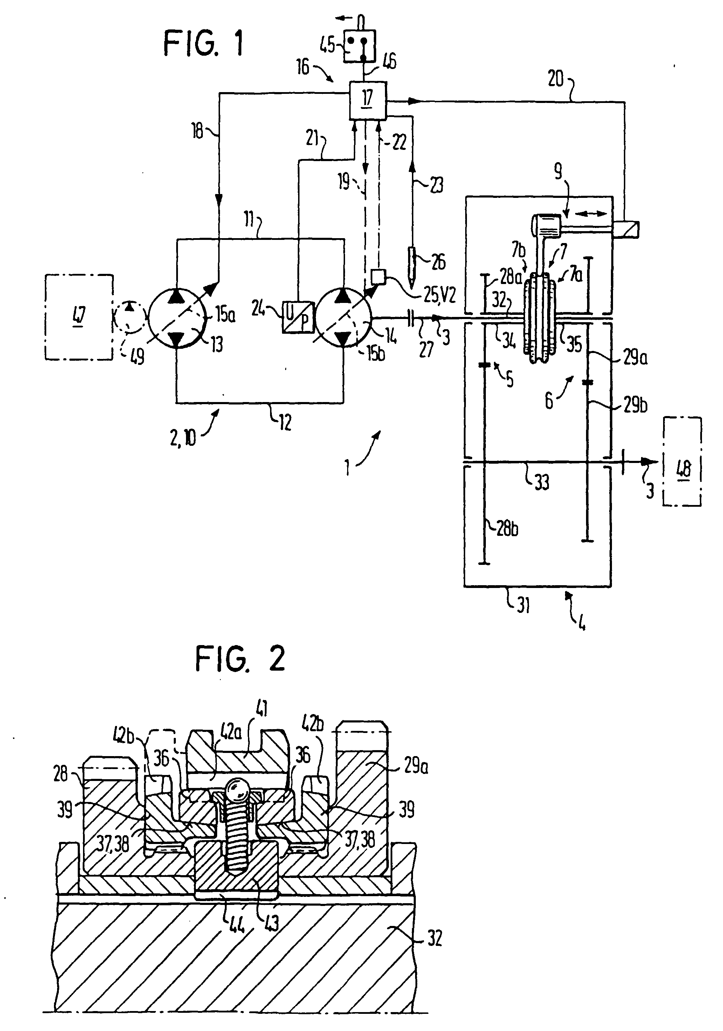

Nachfolgend werden die Erfindung und weitere durch sie erzielbare Vorteile anhand von bevorzugten Ausführungsbeispielen und einer Zeichnung näher erläutert. Es zeigt
Fig. 1 einen elektrohydraulischen Steuerplan für eine erfindungsgemäße Getriebeeinheit mit einem verstellbaren hydrostatischen Getriebe und einem diesem nachgeordneten synchronisierten Schaltgetriebes;
Fig. 2 eine Synchronisiereinrichtung für eine Gangstufe des Schaltgetriebes;
Fig. 3 und 4 jeweils ein die Leistungsgrenze eines Synchronringes der Synchroneinrichtung darstellendes Schaubild;
Fig. 5 einen elektrohydraulischen Steuerplan für eine erfindungsgemäße Getriebeeinheit in abgewandelter Ausgestaltung als Summierungsgetriebe;
Fig. 6 ein prinzipielles Zugkraftdiagramm der Getriebeeinheit synchronisierter Stufe und mit einem mit Hilfe einer weiteren Synchronisiereinrichtung zu- und abschaltbaren Antriebsstrang 56 im Summierungsgetriebe.

Die Getriebeeinheit 1 umfaßt ein verstellbares hydrostatisches Getriebe 2 und ein letzterem in Kraftübertragungsrichtung (Pfeil 3) nachgeordnetes mechanisch synchronisiertes und somit zwangsläufig funktionierendes Schaltgetriebe 4 mit zwei Gangstufen, nämlich einem ersten Gang 5 und einem zweiten Gang 6, wobei ein Rückwärtsgang vorhanden sein kann, was aus Vereinfachungsgründen nicht dargestellt ist. Den Gängen 5, 6 ist eine Synchronisiereinrichtung 7 mit jeweils einem Synchronring 7a, 7b zugeordnet. Zum Schalten der Gänge 5, 6 ist dem Schaltgetriebe 4 eine z.B. mechanisch und/oder elektrisch funktionierende Schaltvorrichtung 9 zugeordnet, die über die Synchronisiereinrichtung 7 auf die Gänge 5, 6 wirkt.

Das hydrostatische Getriebe 2 weist bei der vorliegenden Ausgestaltung einen geschlossenen Kreislauf 10 mit einer Druckleitung 11 und einer Niederdruckleitung 12 auf, zwischen denen in üblicher Weise eingangsseitig eine Hydropumpe 13 und ausgangsseitig ein Hydromotor 14 eingeschaltet sind. Wenigstens eines dieser beiden hydraulischen Teile (Pumpe 13 oder Motor 14) ist bezüglich seines Arbeits- bzw. Durchgangsvolumens einstellbar. Bei der vorliegenden Ausgestaltung sind die Hydropumpe 13 und der Hydromotor 14 jeweils mittels einer Verstellvorrichtung 15a und 15b verstellbar. Zur Regelung oder Steuerung der Getriebeeinheit 1 dient eine Regel- oder Steuereinrichtung 16, die gemäß bestimmten Funktionskriterien halb- oder vollautomatisch die erforderlichen Gangschaltungen ausführt.

Die Steureinrichtung 16 umfaßt ein insbesondere elektronisches Steuergerät 17, vorzugweise mit einem Mikropozessor, das durch Steuerleitungen 18, 19, 20 mit den Verstellvorrichtungen 15a, 15b und mit der Schaltvorrichtung 9 sowie Signalleitungen 21, 22, 23 mit funktionsspezifischen Gebern der Getriebeeinheit 1 verbunden ist. Die Signalleitung 21 verbindet das Steuergerät 17 mit einem Druckwandler 24, der den Arbeitsdruck des hydrostatischen Getriebes 2 in an sich bekannter Weise ermittelt (Druck p) und in ein elektrisches Signal (Spannung U oder Strom I) umwandelt, das somit eine Bemessungsgröße für den Arbeitsdruck darstellt. Die Signalleitung 22 verbindet das Steuergerät 17 mit einer der beiden Verstellvorrichtungen, hier der Verstellvorrichtung 15b, wobei letzterer ein Verstellweg- oder Schwenkwinkelmesser 25 zugeordnet ist, der ein dem Verstellweg oder den vorhandenen Schwenkwinkel oder dem vorhandenen Durchsatzvolumen im Hydromotor 14 proportionales Signal V2 erzeugt, daß zusammen mit dem Signal U oder I Bestimmungsgrößen für das Abtriebsmoment M des hydrostatischen Getriebes 2 oder für die von ihm übertragene Leistung (Leistung N = Druck p mal Durchsatzvolumen V2) vorgibt. Die Signalleitung 23 verbindet das Steurgerät 17 mit einem Drehzahlmesser 26, der auf der das hydrostatische Getriebe 2 mit dem Schaltgetriebe 4 verbindenden Welle 27 sitzt und ein Signal n erzeugt, das der Abtriebsdrehzahl des hydrostatischen Getriebes 2 entspricht und mittels der Signalleitung 23 dem Stuergerät 17 zuführbar ist. Die Steuerleitung 19 und die Signalleitung 22 sind gestrichelt und somit andeutungsweise dargestellt, weil sie nicht unbedingt vorhanden sein müssen, z.B. dann, wenn lediglich die Hydropumpe 13 verstellbar ist. In einem solchen Fall kann der Druckwandler 24 der Hydropumpe 13 oder der Druckleitung 11 bzw. Niederdruckleitung 12 zugeordnet sein, um den jeweilig vorhandenen Druck erfassen zu können. Bei der vorliegenden Ausgestaltung sind die Verstellvorrichtungen 15a, 15b über ihre Nullstellung hinaus verstellbar, wodurch die Drehrichtung des hydrostatischen Getriebes 2 umkehrbar ist und auch die Druckseite wechselt.

Das Schaltgetriebe 4 umfaßt zwei jeweils einen Gang 5, 6 bildende Zahnradpaare 28a, 28b und 29a, 29b, die auf zwei parallel zueinander im Getriebegehäuse 31 drehbar gelagerten Wellen 32, 33 gelagert sind, von denen die Welle 32 als Eingangswelle mit dem Hydromotor 14 verbunden ist, während die Welle 33 eine Ausgangswelle ist.

Die zahnräder 28a, 29a lagern mittels Hohlwellen 34, 35 auf der Eingangswelle 32. Die jedem Gang 5, 6 oder beiden Gängen zugeordnete Synchronisiereinrichtung 7 kann von üblicher Bauart sein. Bei der vorliegenden Ausgestaltung ist jeweils ein Synchronring 36 vorgesehen, dessen Konusfläche 37 mit der Konusfläche 38 eines mittelbar mit dem zugehörigen Zahnrad 28a, 29a verbundenen Mitnehmerringes 39 zusammenwirkt. Beiden vorhandenen Synchronringen 36 ist etwa mittig ein gemeinsamer Funktionsring 41 zugeordnet, der durch die Schaltvorrichtung 9 mittels eines z.B. in eine Ringnut eingreifenden Gestänges relativ zum zugehörigen Synchronring 36 und Mitnehmer ring 39 verschiebbar ist, wobei der Funktionsring 41 den zugehörigen Synchronring 36 axial beaufschlagt und mit besonders geformten Kupplungselementen 42a, 42b mit dem zugehörigen Mitnehmerring 39 zusammenwirkt. Der Funktionsring 41 umgibt koaxial einen mittigen Keilring 43, der mittels einer Keilnutverbindung 44 drehfest mit der Eingangswelle 32 verbunden ist. In der nach links verschobenen (angedeuteten) Verschiebeposition des Funktionsringes 41 ist der erste Gang 5 geschaltet, während in der nach rechts verschobenen Verschiebestellung des Funktionsringes 41 der zweite Gang 6 geschaltet ist. In der Mittelstellung des Funktionsringes 41 ist ein Freilauf vorhanden. Der Steuereinrichtung 16 ist ein Wählschalter 45 zugeordnet und durch eine Wirkverbindung, z.B. Signalleitung 46 mit dem Steuergerät 17 verbunden. Am Wählschalter 45 kann manuell die erwünschte Gangschaltung vorgewählt oder eingeleitet werden.

Die Getriebeeinheit 1 ist für die Anordnung zwischen einem Antriebsmotor 47, bei dem es sich vorzugsweise um einen Verbrennungsmotor und insbesondere um einen Dieselmotor handelt, und der mit der Hydropumpe 13 verbunden ist, und einem Verbraucher 48 bestimmt, der mit der Ausgangwelle 33 des Schaltgetriebes 4 verbunden ist. Die erfindungsgemäße Getriebeeinheit 1 eignet sich insbesondere mit einem Antriebsmotor in Form eines Verbrennungsmotors, vorzugsweise Dieselmotors als Fahrantrieb für Fahrzeuge, insbesondere Baufahrzeuge. Dabei wird eine funktionstüchtige, rubuste und leistungsfähige Getriebeanordnung erreicht, die ein störungsfreies Schalten weitgehend auch unter Lastbedingungen ermöglicht. Zwischen dem angedeuteten Antriebsmotor 47 und dem hydrostatischen Getriebe 2 kann eine Hilfpumpe 49 angeordnet sein, die einen Steuerdruck liefert, der zur hydraulischen Steuerung von Verstell- oder Schaltfunktionen dienen kann, z.B. Steuerung der Verstellvorrichtungen 15a, 15b mittels geeigneten hydraulischen Steuerelementen.

Im folgenden wird die Funktion der Getriebeeinheit 1 einschließlich der Steuereinrichtung 16 anhand eines Schaltvorganges beschrieben. Bei halbautomatischen Betrieb wird ein Gangwechseln durch Betätigung des Wählschalters 45 eingeleitet, wobei die Gangschaltung unverzüglich stattfinden kann oder - sofern ein Drehzahlmesser 26 vorhanden ist - die Gangschaltung erst dann ausgeführt wird, wenn eine Drehzahl vorhanden ist, bei der die Schaltung sinnvoll ist und ein günstiger Drehzahlbereich für den Antriebsmotor 47 vorgegeben ist.

Unmittelbar vor der Ausführung der Schaltung ermittelt das Oberwachungsfunktion ausübende Steuergerät 17, mittels der Signale U oder I und V2, ob das Ausgangsdrehmoment M des hydrostatischen Getriebes 2 größer ist, als das zulässig übertragbare Arbeitsmoment der zugehörigen Synchroneinrichtung 7. Wenn dieses Abtriebsdrehmoment M gleich oder kleiner ist als das Arbeitsmoment, dann kann die Schaltung eines höheren oder tieferen Gangs unverzüglich ausgeführt werden. Wenn dagegen das Abtriebsdrehmoment M größer ist als das Arbeitsmoment, dann wird die Verstellvorrichtung 15b des Hydromotors 14 in Richtung kleineres Durchsatzvolumen verstellt, das heißt zurückgeschwenkt und zwar solange bis das Abtriebsdrehmoment V2 gleich oder kleiner ist als das Arbeitsmoment. Zur Ausführung einer solchen Abtriebsdrehmoment-Verringerung kann ein Steuervorgang oder ein Reglungsvorgang dienen.

Dabei kann das Abtriebsdrehmoment M so gesteuert werden, daß es sich immer an der Leistungsgrenze der zugehörigen Synchroneinrichtung 7 befindet, oder es kann auch eine gedachte Kennlinie unterhalb der Leistungsgrenze angesteuert oder eingeregelt werden. Eine solche Kennlinie, z.B. die Leistungsgrenze, kann in einem Speicher des elektronischen Steuergerätes 17 gespeichert sein. Die Definition einer solchen Kennlinie ist nach Maßgabe der vorhandenen bekannten Leistungsdaten der Synchroneinrichtung unproblematisch zu bestimmen. In jedem Fall wird dann die Gangschaltung eingeleitet oder ausgeführt, wenn das Abtriebsmoment sich auf oder unterhalb der Leistungsgrenze N, d.h. im Bereich S befindet.

Bei vorbeschriebenen Ausführungsbeispiel wurde zur Herabsetzung des Abtriebsdrehmomentes M das Übersetzungsverhältnis des hydrostatischen Getriebes 2 durch Verstellung des Hydromotors 14 verändert bzw. vergrößert. Dies ist günstig, weil eine solche Verstellung unmittelbar Einfluß auf das Abtriebsdrehmoment M ermöglicht. Dabei nimmt die Ausgangsdrehzahl des hydrostatischen Getriebes 2 zwar zu, jedoch ist dies unerheblich, da - wie eingangs bereits erklärt - auf eine zugehörige Drehzahlübereinstimmung nicht geachtet zu werden braucht, so weit eine Drehzahlübereinstimmung zweier miteinander zu verbindender Drehteile, - hier der zugehörigen Synchroneinrichtung - betroffen ist. Bei der erfindungsgemäßen Ausgestaltung wird diese Drehzahlanpassung von der Synchroneinrichtung 7 selbsttätig zwangsläufig ausgeführt. Im Rahmen der Erfindung ist es auch möglich, das Abtriebsdrehmoment M durch eine Entlastung des hydrostatischen Getriebes 2 soweit zu verringern, daß es gleich oder kleiner ist als das Arbeitsmoment der Synchroneinrichtung 7. Eine solche Entlastung läßt sich durch ein Verstellen der Hydropumpe 13 mittels ihrer zugehörigen Verstellvorrichtung 15a in Richtung kleineres Durchsatzvolumen erreichen.

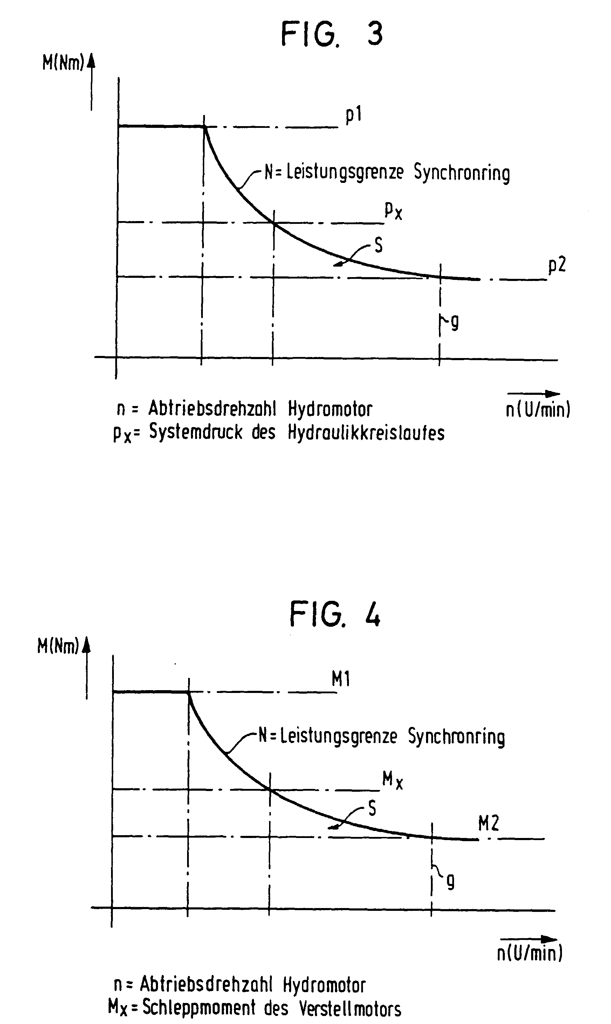

In den Figuren 3 und 4 ist die Leistungsgrenze der Synchroneinrichtung 7 als Kurve N jeweils in einem Koordinatensystem dargestellt, wobei die Abtriebsdrehzahl n des Hydromotors 14 auf der Ordinate und das Abtriebsdrehmoment M auf der Absisse aufgetragen sind. Im Unterschied zu Figur 3, bei der die Kurve der Leistungsgrenze des zugehörigen Synchronrings 36 bei Vergleich mit einem minimalen Arbeitsdruck p1 und einem maximalen Arbeitsdruck p2 verdeutlicht ist, ist in Figur 4 die Kurve der Leistungsgrenze des Synchronrings 36 anhand des minimalen Drehmomentes M1 und des maximalen Drehmomentes M2 verdeutlicht. Außerdem ist in Figur 3 der Systemdruck des Hydraulikkreislaufes mit pₓ bezeichnet, während in Figur 4 das Schleppmoment des verstellbaren Hydromotors 14 mit Mₓ verdeutlicht ist. In beiden Figuren ist die Auslegungsgrenze des Hydromotors 14 mit g bezeichnet. Es ist vorteilhaft, dem Hydraulikkreislauf einen Druckregler zuzuordnen, der wenigstens in einem Teilbereich einen konstanten oder variablen Arbeitsdruck einstellt. Bei einer solchen Ausgestaltung ist gewährleistet, daß zum einen der Arbeitsdruck nicht unter einen vorbestimmten Wert abfällt und deshalb bei einer nachfolgenden Beschleunigung der Arbeitsdruck nicht erst wieder aufgebaut werden muß. Zum anderen werden durch eine Druckregelung aus verschiedenen Gründen resultierende Druckerhöhungen kompensiert, die das Schalten und auch das Fahrverhalten beeinträchtigen können.

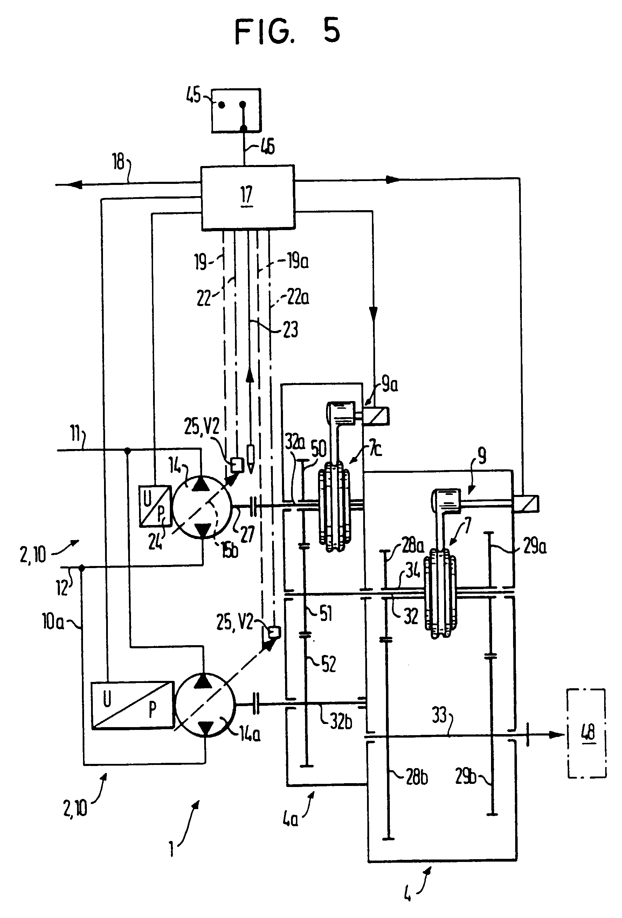

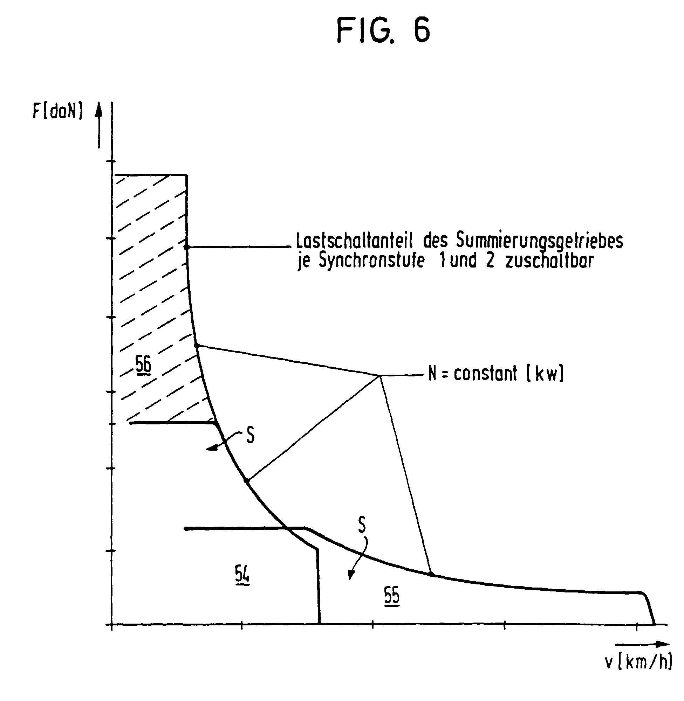

Im folgenden werden weitere Funktionseinzelheiten und Vorteile beschrieben. Bei der erfindungsgemäßen Ausgestaltung ist ein Schalten zu jedem beliebigen Zeitpunkt möglich. Druck- oder Drehzahlwerte des hydrostatischen Getriebes sind nicht als Schaltpunkte zwingend notwendig. Um innerhalb der Leistungsdaten der Synchroneinrichtung 7 einen Schaltvorgang vorzunehmen, sind verschiedene Strategien möglich.
1. Abtriebsmomentenreduzierung der Hydromotorenwelle mit Nullstellungshydromotor
   Durch Verwendung eines Hydromotors 14, der auf einen Schwenkwinkel = etwa 0° und Hubvolumen etwa 0 cm³/U geschwenkt werden kann, ist eine Reduzierung auf ein Abtriebsmoment möglich, daß dem Schleppmoment des Triebwerkes des Hydraulikmotors entspricht. Als Abtriebsdrehzahl werden sich im reduzierten Lastzustand, die durch die Räder und dem mechanischen Getriebe vorgegebenen Werte ergeben. Das Druckniveau des hydrostatischen Getriebes wird im wesentlichen erhalten bleiben.
   In diesem Fahrzustand wird der eine Synchronring entlastet und der andere geschaltet. Die durch den mech. Stufensprung erforderliche Drehzahlanpassung wird im lastreduzierten zustand durch den anderen mechanischen Synchronring vorgenommen.
   Nach Kraftschluß des anderen Synchronringes kann durch Ausschwenken des Hydromotors 14 in Richtung größeren Schwenkwinkels eine beliebige Momentenerhöhung vorgenommen werden. Diese Schaltungsfunktion kann auch vom zweiten in den ersten Gang vorgenommen werden. Bei dieser Schaltungsstrategie ist die Verwendung einer Verstellpumpe 13 nicht zwingend erforderlich. Die Schaltungsfunktion ist auch mit einer Konstantpumpe und Nullstellungs-Verstellmotor erreichbar.
2. Abtriebsmomentenreduzierung der Hydromotorenwelle durch Druckregelung
   Synchroneinrichtungen 7 weisen Leistungsgrenzen auf, die einem analogen Systemdruck des hydrostatischen Getriebes entsprechen. Auf dieses erforderliche Druckniveau wird bei einem gewünschten Schaltungsvorgang das hydrostatische Getriebe 2 geregelt.
   In dieser Schaltungsstrategie ist ein verstellbarer Hydromotor 14 nicht erforderlich. Unterhalb der Leistungsgrenzen N der Synchroneinrichtung 7 ist eine Korrektur der vorgegebenen Pumpeneinstellung nicht erforderlich. Ist das notwendige Systemdruckniveau über die Druckregelung der Verstellpumpe 13 erreicht, was z.B. über einen Druckumformer als Istwertgeber überwacht werden kann, so läuft der Schaltungsvorgang wie unter 1 beschrieben ab. Der Momentenaufbau an der Motorabtriebswelle 27 wird über die Erhöhung des Systemdruckes durch die Druckregelung erreicht.
   Mit denen in Abschnitt 1. und 2. beschriebenen Schaltungsstrategien lassen sich mehrstufige mit Synchronisierungseinrichtungen ausgestattete mechanische Schaltgetriebe mit hydrostatischen Getrieben unter Fahrt schalten. Hierbei ist während der Schaltphase ein kurzfristiger Momenten- bzw. Zugkraftunterbruch vorhanden.
   Die Verwendung dieser Schaltungstechnologie bei Summierungsgetrieben ermöglicht es wie in Fig. 5 und 6 dargestellt, jeder Schaltstufe eine Laststufe vorzuschalten.
   Bei Summierungsgetrieben ist es zweckmäßig in Verbindung mit einem Nullstellungsmotor entsprechend Abschnitt 2 vorzugehen.

Beim Ausführungsbeispiel nach Figur 5, bei dem gleiche oder vergleichbare Teile mit gleichen oder entsprechenden Bezugszeichen versehen sind, ist die Getriebeeinheit 1 im Sinne eines sogenannten Summierungsgetriebes ausgebildet. Der Hydrokreislauf 10 weist einen parallelen Leitungsabschnitt 10a auf, in dem ein weiterer Hydromotor 14a angeordnet ist, bei dem es sich um einen Konstantmotor oder um einen Verstellmotor handeln kann, der in vorbeschriebenen Sinne durch eine Steuerleitung 19a und eine Signalleitung 22a mit dem Steuergerät 17 verbunden ist. Dem Schaltgetriebe 4 ist ein Getriebeabschnitt 4a mit zwei parallelen Wellen 32a, 32b und der vorverlängerten Welle 32 zugeordnet, die durch Zahnräder 50, 51, 52 miteinander verbunden sind. Hierdurch ist ein Getriebezweig geschaffen, der wahlweise zuschaltbar ist. Auf der Eingangswelle 32a ist eine weitere Synchronisiereinrichtung 7c entsprechend dem vorbeschriebenen Ausführungsbeispiel angeordnet, die zur Zuschaltung und Synchronisation des Getriebezweiges dient und nach einer Seite hin wirksam ist. Der Getriebezweig bildet eine Synchronlaststufe für das Synchrongetriebe 4. Diese Variante ermöglicht es, das Abtriebsdrehmoment M dadurch zu verringern, daß ein Teil des Abtriebsdrehmomentes M, hier der Hydromotor 14 außer Funktion gesetzt wird durch Unterbrechung der Antriebsverbindung zwischen dem Hydromotor 14 und dem Schaltgetriebe 4, was durch die Synchronisiereinrichtung 7c wahlweise ausführbar ist. Bei dieser Ausgestaltung wird auch das Arbeitsmoment der Synchronisiereinrichtung 7c beim Zuschalten des Hydromotors 14 berücksichtigt, nämlich dadurch, daß das Abtriebsmoment durch Einstellung des Hydromotors 14 in Richtung auf kleineres Durchsatzvolumen so eingestellt wird, daß das Abtriebsmoment unterhalb der Leistungsgrenze der zugehörigen Synchroneinrichtung 7c liegt.

Sofern der Hydromotor 14a ein Konstantmotor ist, kann er so ausgelegt sein, daß das von ihm übertragene Abtriebsdrehmoment immer kleiner ist als das Arbeitsmoment der Synchroneinrichtung 7, das heißt, nach Abschaltung des Hydromotors 14 kann der gewünschte Gang unverzüglich geschaltet werden.

Figur 6 zeigt das Beispiel einer Getriebeauslegung bei konstanter Leistung N mit den Synchronstufen 54, 55 der Synchroniereinrichtungen 7, 7c in einem Koordinatensystem, auf dessen Ordinate die Geschwindigkeit und auf dessen Abszisse die Antriebskraft aufgetragen ist. Der Lastschaltanteil des Summierungsgetriebes ist mit 56 bezeichnet.

### Weitere Vorteile:

Die Fahrbereiche bzw. Gänge sind während der Fahrt schaltbar über das synchronisierte Getriebe 4.

Jede synchronisierte Fahrstufe 5, 6 hat eine Lastschaltstufe.

Günstige Wärmebilanz durch Synchronringe.

Einfache Drehzahlanpassung über Synchronringe.

Verwendung von Standardgetrieben möglich, dadurch kostengünstig.

Hoher Wandlungsbereich, mit günstigen Hydromotorgrößen
a) Wandlungsbereich hydrostatisch bis ca. 12 : 1 bei günstigem Wirkungsgrad
b) mit 2-stufigen synchronisierten Getriebe bis ca. 40 : 1 bei üblichem maximalen Stufensprung.

Mögliche Reduzierung der Schaltgetriebe auf 2 Stufen über Lastschaltfunktion des Summierungsgetriebes.

Verwendung von vorgesteuerten Hydraulikeinheiten, dadurch folgende Vorteile:
a) kontrolliertes Fahrverhalten, da hochdruckunabhängig
b) über Mikroprozessor sind beliebige Programme möglich.

Bei Standardauslegung ist über Lastschaltfunktion eine erhebliche, gegebenenfalls sogar doppelte Zugkrafterhöhung möglich.

Einfaches Abschleppen ist möglich.

Getriebe-Baukastensystem möglich
a) Grundausstattung, 2-stufiges synchronisiertes Schaltgetriebe,
b) einfache Erweiterung durch Lastschaltstufe in jeder Getriebestufe mit Variation
   - 2 x Verstellmotor
   - 1 x Verstellmotor und 1 x Konstantmotor

Bei Nullstellungsmotor keine Planverluste, da über die Synchronisiereinrichtung 7, 7c abgeschaltet werden kann (Wirkungsgrad).

Relativ einfache Steuerungsstrategie.

## Patentansprüche

1. Getriebeeinheit (1) zur Anordnung zwischen einem Antriebsmotor (47) und einem Verbraucher (48), bestehend aus einem mittels einer Verstellvorrichtung (15a, 15b) verstellbaren hydrostatischen Getriebe (2), einem letzteren nachgeordneten mechanischen Schaltgetriebe (4) mit mehreren Gangstufen (5, 6) und einer Steuereinrichtung zum Verstellen des hydrostatischen Getriebes (2) mittels der Verstellvorrichtung (15a, 15b) für einen Schaltvorgang
**dadurch gekennzeichnet, daß**
das Schaltgetriebe (4) ein Synchrongetriebe mit Synchronisiereinrichtungen (7, 7a) für die Gangstufen (5, 6) ist, daß der Steuereinrichtung (16) eine Einrichtung (U, V2) zum Messen oder Überwachen des Abtriebsdrehmomentes (M) des hydrostatischen Getriebes (2) zugeordnet ist, und daß dann, wenn vor einem Schaltvorgang das Abtriebsdrehmoment (M) größer ist als das Arbeitsmoment der zugehörigen Synchronisiereinrichtung (7, 7a), die Steuereinrichtung (16) mittels der Verstellvorrichtung (15a, 15b) ein Abtriebsdrehmoment (M) am hydrostatischen Getriebe (2) einstellt, das gleich oder kleiner ist als das Arbeitsmoment der der zugehörigen Gangstufe (6, 7) zugeordneten Synchronisiereinrichtung.

2. Getriebeeinheit nach Anspruch 1
**dadurch gekennzeichnet, daß**
die Einrichtung zum Messen oder Überwachen des Abtriebdrehmoments (M) einen den Arbeitsdruck des hydrostatischen Getriebes ermittelnden Druckmesser aufweist, der ein entsprechendes Steuersignal für die Steuereinrichtung (16) erzeugt.

3. Getriebeeinheit nach Anspruch 1 oder 2,
**dadurch gekennzeichnet, daß**
die Einrichtung zum Messen oder Überwachen des Antriebsdrehmomentes (M) eine Meßvorrichtung zur Ermittlung des Kreislaufvolumens oder des Durchsatzvolumens (V2) insbesondere im Hydromotor (14) aufweist, die ein entsprechendes Steuersignal für die Steureinrichtung (16) erzeugt.

4. Getriebeeinheit nach wenigstens einem der vorhergehenden Ansprüche,
**dadurch gekennzeichnet, daß**
die Hydropumpe (13) und/oder der Hydromotor (14) jeweils mittels der (Verstellvorrichtung 15a, 15b) verstellbar ist.

5. Getriebeeinheit nach Anspruch 4,
**dadurch gekennzeichnet, daß**
die Meßvorrichtung ein den Verstellweg oder Verstellwinkel ermittelnder Weg- oder Winkelmesser (25) ist.

6. Getriebeeinheit nach wenigstens einem der vorhergehenden Ansprüche
**dadurch gekennzeichnet, daß**
ein die Abtriebsdrehzahl des hydrostatischen Getriebes (2) oder eine entsprechende Drehzahl ermittelnder Drehzahlmesser (26) vorgesehen ist, der ein Steuersignal für die Steuereinrichtung (16) erzeugt.

7. Getriebeeinheit nach wenigstens einem der vorangehenden Ansprüche
**dadurch gekennzeichnet, daß**
eine halb- oder vollautomatische, vorzugsweise elektronische Steuereinrichtung (16, 17) vorgesehen ist, die durch Steuer- bzw. Signalverbindungen mit der oder den Verstellvorrichtungen (15a, 15b), dem Druckmesser, der Meßvorrichtung für das Durchsatzvolumen, dem Drehzahlmesser und/oder einer Schaltvorrichtung (9) für das Schaltgetriebe (4) verbunden ist.

8. Getriebeeinheit nach wenigstens einem der vorangehenden Ansprüche
**dadurch gekennzeichnet, daß**
der Verstellvorrichtung (15a, 15b) für die Hydropumpe (13) und/oder dem Rydromotor (14) jeweils ein Druckregler zugeordnet ist, der einen solchen Arbeitsdruck im hydrostatischen Getriebe (2) einstellt, daß sein Abtriebsmoment (11) gleich oder kleiner ist, als das Arbeitsmoment der zugehörigen Synchronisiereinrichtung (7, 7a).

9. Getriebeeinheit nach wenigstens einem der vorhergehenden Ansprüche,
**dadurch gekennzeichnet, daß**
das hydrostatische Getriebe (2) mehrere Hydromotoren (14, 14a) in Form von Konstantmotoren und/oder Verstellmotoren aufweist, wobei ein Teil der Hydromotoren (14) wahlweise abschaltbar ist.

10. Getriebeeinheit nach Anspruch 9
**dadurch gekennzeichnet, daß**
in der Getriebeverbindung zwischen dem einen Hydromotor (14) und dem Schaltgetriebe (4) eine lösbare Getriebeverbindung, mit einer weiteren mechanischen Synchronisiereinrichtung (7c) vorzugsweise in Form eines schaltbaren Ganges mit einer Synchronisiereinrichtung (7a), vorgesehen ist.

## Claims

1. Transmission unit (1) for arrangement between a drive motor (47) and a consuming device (48), comprising a hydrostatic transmission (2), adjustable by means of an adjusting device (15a, 15b), a mechanical shift transmission (4), functionally arranged downstream of the hydrostatic transmission, having a plurality of gears (5, 6), and a control device for adjusting the hydrostatic transmission (2) by means of the adjusting device (15a, 15b) for a shifting process,
characterised in that,
the shift transmission (4) is a synchronous transmission with synchronisation devices (7, 7a) for the gears (5, 6), in that,
a device (U, V2) for the measuring or monitoring of the output drive torque (M) of the hydrostatic transmission (2) is associated with the control device (16),
and in that,
in the event that before a process of gear shifting the output drive torque (M) is greater than the working moment of the associated synchronisation device (7, 7a) the control device (16) sets an output drive torque (M) at the hydrostatic transmission (2) by means of the adjustment device (15a, 15b), which is equal to or smaller than the working moment of the synchronisation device which is associated with the relevant gear (6, 7).

2. Transmission unit according to claim 1,
characterised in that,
the device for measuring or monitoring the output drive torque (M) has a pressure sensor for determining the working pressure of the hydrostatic transmission, which sensor generates a corresponding control signal for the control device (16).

3. Transmission unit according to claims 1 or 2,
characterised in that,
the device for measuring or monitoring the output drive torque (M) comprises a measuring device for determination of the circulation volume or the through-put volume (V2) in particular in the hydraulic motor (14), which generates a corresponding control signal for the control device (16).

4. Transmission unit according to at least one of the preceding claims,
characterised in that
the hydraulic pump (13) and/or the hydraulic motor (14) are respectively adjustable by means of the adjusting devices (15a, 15b).

5. Transmission unit according to claim 4,
characterised in that,
the measuring device is a displacement or displacement angle detecting device (25) for detecting the displacement or displacement angle.

6. Transmission unit according to at least one of the preceding claims,
characterised in that,
a speed of rotation detector (26), for detecting the drive output speed of rotation of the hydrostatic transmission (2) or a corresponding speed of rotation, is provided which generates a control signal for the control device (16).

7. Transmission unit according to at least one of the preceding claims,
characterised in that,
a semi- or fully automatic, preferably electronic control device (16, 17) is provided, which is connected with the adjusting device or devices (15a, 15b), the pressure sensor, the measuring device for the through-put volume, the speed of rotation detector and/or a shifting device (9) for the shift transmission (4), by means of control or signal connections.

8. Transmission unit according to at least one of the preceding claims,
characterised in that
the adjusting device (15a, 15b) for the hydraulic pump (13) and/or the hydraulic motor (14) has associated therewith a respective pressure regulator, which sets such a working pressure in the hydrostatic transmission (2) that its output drive moment (11) is equal to or smaller than the working moment of the corresponding synchronisation device (7, 7a).

9. Transmission unit according to at least one of the preceding claims,
characterised in that
the hydrostatic transmission (2) comprises a plurality of hydraulic motors (14, 14a) in the form of constant motors and/or adjustable motors, whereby part of the hydraulic motors (41) can be selectively disengaged.

10. Transmission unit according to claim 9,
characterised in that
in the transmission connection between the one hydraulic motor (14) and the shift transmission (4) a disengageable transmission connection is provided, with a further mechanical synchronisation device (7a) preferably in the form of a selectable gear with a synchronisation device (7a).

## Revendications

1. Unité de transmission (1) destinée à être placée entre un moteur d'entraînement (47) et un récepteur (48), constituée d'une transmission hydrostatique (2), réglable au Moyen d'un dispositif de réglage (15a, 15b), d'une boîte de vitesses mécanique (4) montée en aval de cette dernière, avec plusieurs rapports (5, 6) et d'un dispositif de commande pour le réglage de la transmission hydrostatique (2) au moyen du dispositif de réglage (15a, 15b) pour une opération de commutation, caractérisée en ce que la boîte de vitesses (4) est une boîte de vitesses synchrone avec dispositifs de synchronisation (7, 7a) pour les rapports (5, 6), en ce qu'au dispositif de commande (16) est associé un dispositif (U, V2) pour la mesure ou le contrôle du couple de rotation de sortie (M) de la transmission hydrostatique (2), et en ce que dans le cas où avant une opération de commutation, le couple de rotation de sortie (M) est supérieur au moment de travail du dispositif de synchronisation (7, 7a) correspondant, le dispositif de commande (16) règle un couple de rotation de sortie (M) sur la transmission hydrostatique (2), qui est égal ou inférieur au moment de travail du dispositif de synchronisation associé au rapport (6, 7) correspondant.

2. Unité de transmission selon la revendication 1, caractérisée en ce que le dispositif de mesure ou de contrôle du couple de rotation de sortie (M) comporte un dispositif de mesure de pression déterminant la pression de travail de la transmission hydrostatique, qui produit un signal de commande correspondant pour le dispositif de commande (16).

3. Unité de transmission selon la revendication 1 ou 2, caractérisée en ce que le dispositif de mesure ou de contrôle du couple de rotation de sortie (M) comporte un dispositif de mesure pour la détermination du volume du circuit ou débit (V2), en particulier dans le moteur hydraulique (14), qui produit un signal de commande correspondant pour le dispositif de commande (16).

4. Unité de transmission selon l'une au moins des revendications précédentes, caractérisée en ce que la pompe hydraulique (13) et/ou le moteur hydraulique (14) sont réglables chacun au moyen du dispositif de réglage (15a, 15b).

5. Unité de transmission selon la revendication 4, caractérisée en ce que le dispositif de mesure est un dispositif de mesure de distance ou d'angle (25) déterminant la distance de réglage ou l'angle de réglage.

6. Unité de transmission selon l'une au moins des revendications précédentes, caractérisée en ce que il est prévu un dispositif de mesure de vitesse de rotation (26) déterminant la vitesse de rotation de sortie de la transmission hydrostatique (2) ou une vitesse de rotation correspondante, qui produit un signal de commande pour le dispositif de commande (16).

7. Unité de transmission selon l'une au moins des revendications précédentes, caractérisée en ce que il est prévu un dispositif de commande (16, 17) semi-automatique ou entièrement automatique, de préférence électronique, qui est relié par des liaisons de commande ou des liaisons de signaux avec le ou les dispositifs de réglage (15a, 15b), le dispositif de mesure de pression, le dispositif de mesure du débit, le dispositif de mesure de vitesse de rotation et/ou un dispositif de commutation (9) pour la boîte de vitesses (4).

8. Unité de transmission selon l'une au moins des revendications précédentes, caractérisée en ce que au dispositif de réglage (15a, 15b) pour la pompe hydraulique (13) et/ou le moteur hydraulique (14) est associé chaque fois un régulateur de pression, qui règle une pression de travail dans la transmission hydrostatique (2) de manière que son moment de sortie (11) soit égal ou inférieur au moment de travail du dispositif de synchronisation (7, 7a) correspondant.

9. Unité de transmission selon l'une au moins des revendications précédentes, caractérisée en ce que la transmission hydrostatique (2) comporte plusieurs moteurs hydrauliques (14, 14a) sous la forme de moteurs constants et/ou de moteurs de réglage, une partie des moteurs hydrauliques (14) pouvant au choix être mis à l'arrêt.

10. Unité de transmission selon la revendication 9, caractérisée en ce que dans la liaison de transmission entre un moteur hydraulique (14) et la boîte de vitesses (4) il est prévu une liaison de transmission détachable, avec un autre dispositif de synchronisation (7c) mécanique, de préférence sous la forme d'un rapport commutable avec un dispositif de synchronisation (7a).
